# EUROPEAN PATENT APPLICATION

(11) **EP 3 593 998 A1**
(43) Date of publication of application: **15.01.2020**
(21) Application number: 19191984.4
(22) Date of filing: 29.06.2017
(51) Int. Cl.: B33Y 10/00, B33Y 80/00, B22F 3/105, B29C 64/153, F23R 3/00

(54) **METHODS AND THIN WALLED REINFORCED STRUCTURES FOR ADDITIVE MANUFACTURING**

(30) Priority: 01.07.2016 US 201615200532
(62) Divisional of application: 17740833.3
(71) Applicant: General Electric Company, Schenectady, NY 12345 (US)
(72) Inventor: Dunham, Neal Earl, Hamilton OH 45011 (US); Stevenson, Christian Xavier, Blanchester OH 45107 (US)
(74) Representative: Hafner & Kohl Patent- und Rechtsanwälte Partnerschaft mbB

(57) **Abstract**

The present disclosure generally relates to methods for additive manufacturing (AM) that utilize integrated ribs (224) to support thin walled annular structures (220). An annular wall (910) fabricated using AM has a thickness less than 0.022 inches (560 µm) across a majority of a surface of the annular wall (910) and a plurality of ribs (224) having a thickness greater than 0.030 inches (762 µm) . The annular wall (910) has a mean thickness less than 0.100 inches (2.54 mm). The annular wall conforms to a surface of the component (210) and a mean distance between the annular wall (910) and the component (210) is less than 0.080 inches (2 mm).

## Description

### INTRODUCTION

The present disclosure generally relates to methods for manufacturing thin walled reinforced structures using additive manufacturing (AM), as well as novel reinforced structures manufactured by these AM processes.

### BACKGROUND

AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics are in use. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex.

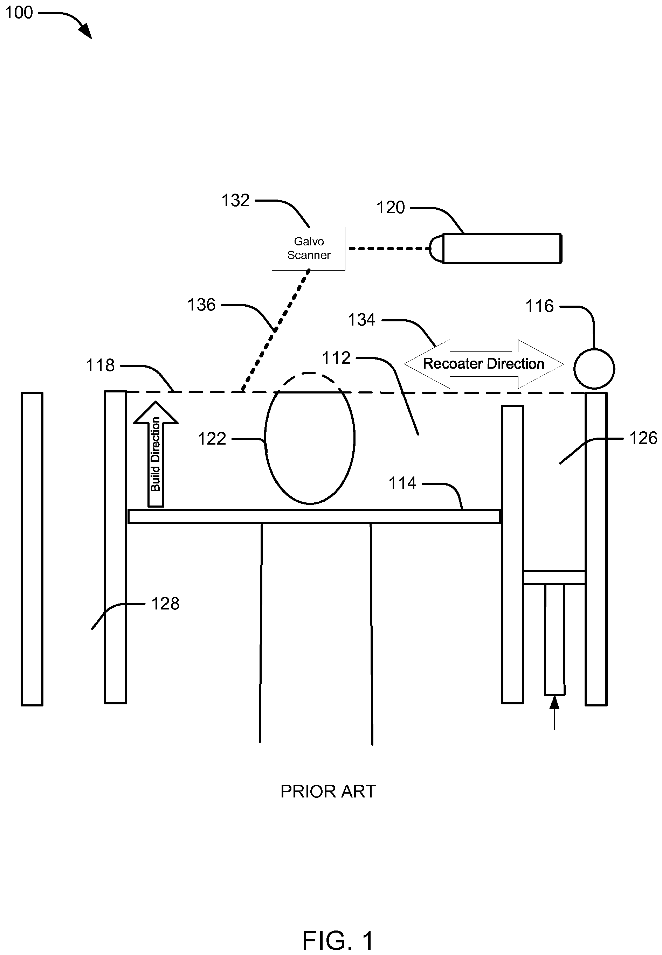

FIG. 1 is schematic diagram showing a cross-sectional view of an exemplary conventional system 100 for direct metal laser sintering (DMLS) or direct metal laser melting (DMLM). The apparatus 100 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of access powder by, for example, blowing or vacuuming. Other post processing procedures include a stress release process. Additionally, thermal and chemical post processing procedures can be used to finish the part 122.

The present inventors have discovered that thin walled structures pose difficulties for AM techniques. In particular, thin walls are subject to damage from the recoater arm 116. Accordingly, various components having thin walls present problems for AM techniques.

In view of the above, it can be appreciated that there are problems, shortcomings or disadvantages associated with AM techniques, and that it would be desirable if improved methods of supporting objects and support structures were available.

### SUMMARY

The following presents a simplified summary of one or more aspects of the invention in order to provide a basic understanding of such aspects. This summary is not an extensive overview of all contemplated aspects, and is intended to neither identify key or critical elements of all aspects nor delineate the scope of any or all aspects. Its purpose is to present some concepts of one or more aspects in a simplified form as a prelude to the more detailed description that is presented later.

In one aspect, the disclosure provides a method for fabricating an object. The method includes: (a) irradiating a layer of powder in a powder bed with an energy beam in a series of scan lines to form a fused region; (b) providing a subsequent layer of powder over the powder bed by passing a recoater arm over the powder bed from a first side of the powder bed to a second side of the powder bed; and (c) repeating steps (a) and (b) until the object is formed in the powder bed. The object includes a first annular portion and a second annular portion. The second annular portion is an annular wall with a thickness less than 0.022 inches (560 micrometers (µm)) across a majority of a surface of the second portion. The second annular portion conforms to a shape of the first portion. A mean distance between the first annular portion and second annular portion is less than 0.080 inches (2 millimeters (mm). The second annular portion includes a plurality of ribs having a thickness greater than 0.030 inches (762 µm), and a mean thickness of the second annular portion is less than 0.100 inches (2.54 mm).

In another aspect, the disclosure provides a thin walled structure. The thin walled structure includes an annular wall with a thickness less than 0.022 inches (560 µm) across a majority of a surface of the annular wall and a plurality of helical ribs having a thickness greater than 0.030 inches (762 µm). The annular wall has a mean thickness less than less than 0.100 inches. (2.54 mm). The annular wall conforms to a surface of a component, and a mean distance between the thin walled structure and the component is less than 0.080 inches (2 millimeters (mm).

These and other aspects of the invention will become more fully understood upon a review of the detailed description, which follows.

### BRIEF DESCRIPTION OF THE DRAWINGS

FIG. 1 is schematic diagram showing an example of a conventional apparatus for additive manufacturing.
FIG. 2 illustrates an example of an annular component and an annular thin walled structure.
FIG. 3 illustrates a vertical cross-sectional view of the annular component and the annular thin walled structure of FIG. 2.
FIG. 4 illustrates a horizontal cross-sectional view of the annular component and the annular thin walled structure of FIG. 2.
FIG. 5 illustrates an example of a rectangular rib.
FIG. 6 illustrates an example of a T-shaped rib.
FIG. 7 illustrates an example of a round rib.
FIG. 8 illustrates an example of a circular rib.
FIG. 9 illustrates a longitudinal cross-sectional view of an exemplary annular component and internal thin walled structure having various diameters.
FIG. 10 illustrates a longitudinal cross-sectional view of an exemplary annular component and internal thin walled structure having various diameters.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components are shown in block diagram form in order to avoid obscuring such concepts.

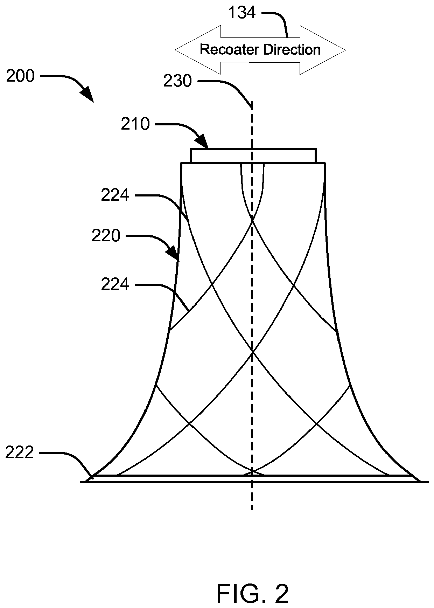

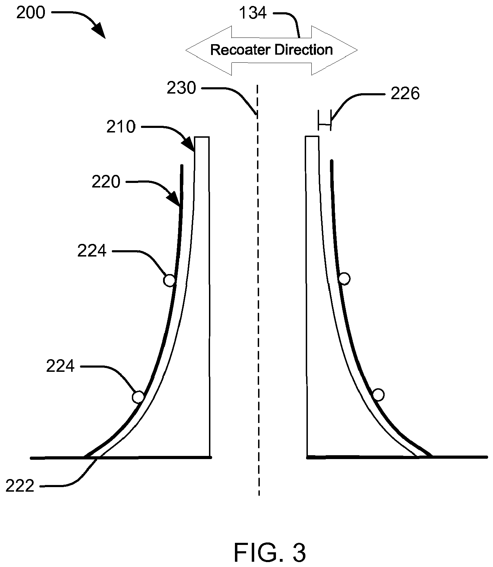

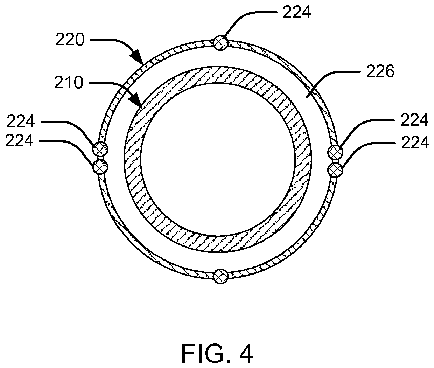

FIGS. 2-4 illustrate an example of an annular component and an annular thin walled structure. For example, the annular component may be an engine component, and the thin walled structure may be a heat shield. It should be appreciated that a thin walled structure may be used for a variety of uses with various components. For example, a thin walled structure may form a cover or guard (e.g., against mechanical impact, erosion, or hard body damage. A thin walled structure may also provide for a fluid flowpath. For example, the thin walled structure may be one of the walls of a multi-walled structure. FIG. 2 is a diagram 200 illustrating a front view of an example component 210 and thin walled structure 220. It should be appreciated that a thin walled structure FIG. 3 is a diagram 300 illustrating an axial cross section of the example component 210 and thin walled structure 220. FIG. 4 is a lateral cross-section of the example component 210 and thin walled structure 220.

The component 210 is generally annular about an axis 230 such that the component 210 surrounds the axis along at least 180 degrees of rotation. For example, the component 210 may be generally cylindrical or conical. In an aspect, the generally annular component 210 is penannular or semi-annular. That is, the component 210 may include a break or opening, or form only part of a ring about the axis 230. Further, a generally annular component does not necessarily have a constant radius. A diameter of the annular component refers to the length of a longest line drawn from a wall of the annular component, through the axis 230, to another point on the wall of the annular component. The axis 230 may be an axis of the component 210 and/or an axis of the whole apparatus. For example, in a jet engine (e.g., a gas turbine engine), the axis 230 may be aligned with a high-pressure and/or low-pressure turbine shaft. In this example, the component 210 may be an engine component such as, for example, a combustor, a combustor liner, a nozzle, a particle separator, an impeller shroud, an engine support, or any other generally annular component of an engine..

The thin walled structure 220 is another generally annular surface about the axis 230. In an aspect, the thin walled structure 220 is penannular or semi-annular. The thin walled structure 220 is a generally thin walled structure. In an embodiment, the thickness of the thin walled structure 220 is less than 0.022 inches (560 µm) for a majority of the surface of the thin walled structure 220, preferably less than 0.020 inches (508 µm), and even more preferably less than 0.010 inches (254 µm). The thin walled structure 220 is generally concentric with the component 210. The axis of the thin walled structure 220 may diverge from the axis of the component 210 by, for example, up to 10 percent of a diameter of the component 210. The thin walled structure 220 generally conforms to the shape of the component 210. For example, the thin walled structure 220 has generally the same curvature as an external surface of the component 210. The thin walled structure 220 defines a space 226 between the thin walled structure 220 and the component 210. During fabrication, the space 226 is filled with unfused powder. After fabrication, the powder is removed such that the space 226 is filled with air. In an aspect, the mean distance between the thin walled structure 220 and the component 210 is less than 0.080 inches (2.0 mm). In an aspect, the thin walled structure 220 is spaced less than 0.080 inches (2.0 mm) from the component 210 across an entire surface of the thin walled structure 220. For example, no point on the thin walled structure 220 is more than 0.080 inches (2.0 mm) from the surface of the component 210. Accordingly, the thin walled structure 220 may be a heat shield that provides thermal insulation of the component 210 from other components in an engine without significantly changing the size or shape of the component 210. In another aspect, the space 225 has a generally constant radial width. For example, the radial width of the space 225 may vary by less than 10 percent except where the thin walled structure 220 is connected to the component 210.

The thin walled structure 220 is connected to the component 210 at a seam 222. The seam 222 is located along one edge of the thin walled structure 220. The thin walled structure 220 is separated from the component 210 by the space 226 for a majority of the surface area of the thin walled structure 220. Accordingly, when the thin walled structure 220 is a heat shield, the separation provides a high degree of thermal isolation between the thin walled structure 220 and the component 210 compared to known heat shields. In another implementation, the thin walled structure 220 may be connected to the component 210 at various point contacts. The additive manufacturing techniques and integrated support structures disclosed herein allow for minimization of the contact between the thin walled structure 220 and the component 210. For example, a percentage of the surface area of the thin walled structure 220 that is connected to the component 210 may be less than 1 percent of the total surface area of the thin walled structure 220.

The thin walled structure 220 includes ribs 224. The ribs 224 are co-axial wound ribs formed about the axis 230. For example, each rib 224 is a helical rib wound about the axis 230. The ribs 224 may be wound in different directions and may intersect. The intersecting ribs 224 form a web. The web may be, for example, an isogrid (forming triangles) or an orthogrid (forming rectangles). Other rib patterns may be selected. The ribs 224 provide structural support for the thin walled structure 220 during both manufacture and use of the thin walled structure 220. The ribs 224 are thicker than the majority of the thin walled structure 220. For example, the ribs 224 are 2 to 5 times the thickness of the majority of the thin walled structure 220. The ribs may be 0.030 inches (762 µm) to 0.100 inches (2.54 mm) thick, preferably about 0.060 inches (1.5 mm). Because the ribs 224 are only located in certain locations of the heat shield, the mean thickness of the thin walled structure 220 including ribs and thin portions remains less than 0.100 inches (2.54 mm) when the ribs are at a maximum thickness. Preferably, the ribs are thinner. For example, when the ribs are about 0.060 inches, the mean thickness of the heat shield remains less than 0.030 inches (762 µm). Accordingly, the combination of thin walls and ribs allows for fabrication of a thin walled structure (e.g., a heat shield) with an average thickness less than would be necessary to fabricate a solid wall with a uniform thickness using the same AM process.

For example, the thin walled structure 220 may be fabricated concurrently with the component 210 using an additive manufacturing process. In an aspect, a DMLM process is used to fabricate the component 210 and the thin walled structure 220 from the same powdered metal to form metallic components. For example, the component 210 and the thin walled structure 220 may be fabricated in a series of lateral layers orthogonal to the axis 230. For example, the seam 222 may be formed in a layer where the component 210 and the thin walled structure 220 are connected. In layers where the thin walled structure 220 is separated from the component 210, the thin walled structure 220 may be separated from the component 210 by a thin continuous portion of unfused powder in the space 226. As the apparatus 100 is forming a layer of the component 210 and the thin walled structure 220, the thin walls of the thin walled structure 220 may be prone to damage from the recoater 116. For example, the recoater 116 may exert lateral forces in the recoater direction 134 against the thin walled structure 220, which may cause the thin walled structure 220 to bend or deform. The ribs 224 provide resistance against damage from the recoater 116. As illustrated in FIG. 4, in each layer, the ribs 224 are spaced around the thin walled structure 220, providing support against lateral forces generated by the recoater 116. When the component 210 and the thin walled structure 220 is completed, the web of ribs 224

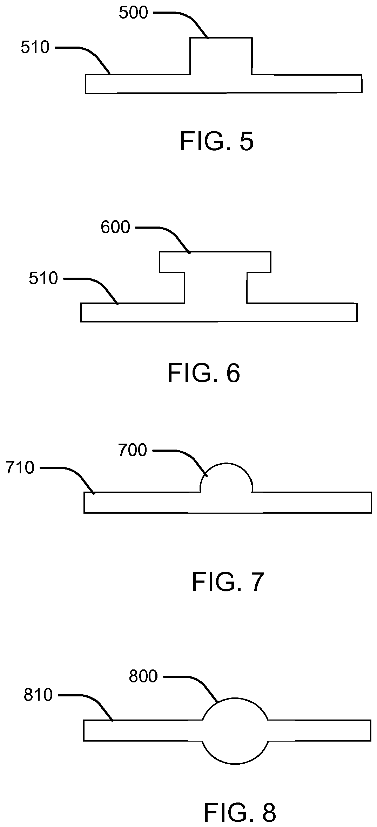

FIG. 5 illustrates an example of a rib 500 on a wall 510. The wall 510 may be an example of the thin walled structure 220. The rib 500 is rectangular and extends from one side of the wall 510. For example, the rib 500 may be formed on an internal or external surface of the thin walled structure 220.

FIG. 6 illustrates an example of a rib 600 on a wall 610. The wall 610 may be an example of the thin walled structure 220. The rib 600 has a T-shaped cross section and extends from one side of the wall 610. For example, the rib 500 may be formed on an internal or external surface of the thin walled structure 220. The T-shaped cross section may provide additional strength in comparison to the rib 500 while adding only minimal additional material and weight.

FIG. 7 illustrates an example of a rib 700 on a wall 710. The wall 710 may be an example of the thin walled structure 220. The rib 700 has a semi-circular cross-section and extends from one side of the wall 710. For example, the rib 700 may be formed on an internal or external surface of the thin walled structure 220.

FIG. 8 illustrates an example of a rib 800 on a wall 810. The wall 810 may be an example of the thin walled structure 220. The rib 800 has a circular cross-section and extends from both sides of the wall 710. For example, the rib 700 may be formed on both the internal and external surfaces of the thin walled structure 220.

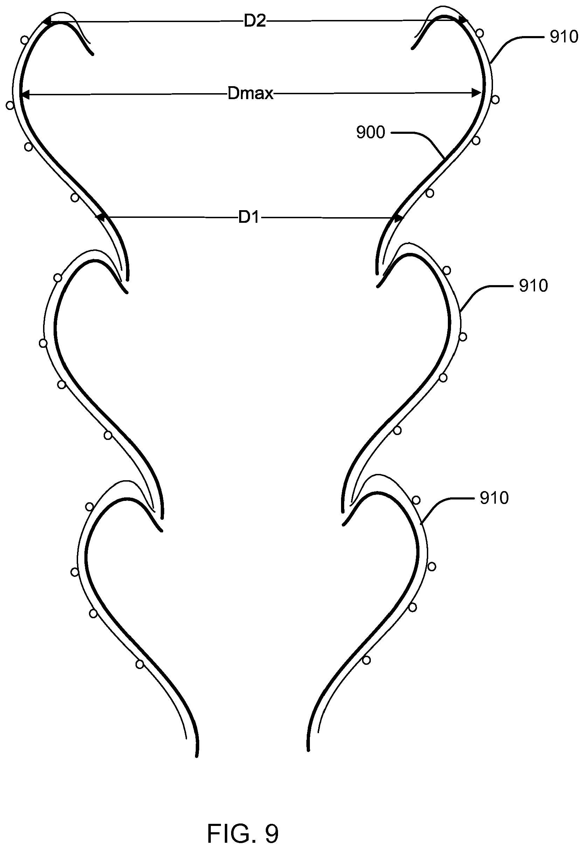

FIG. 9 illustrates an example of a component 900 and annular walls 910. The component 900 may be, for example, a combustor and the annular walls 910 may form a thin walled structure that may server as a heat shield. A combustor may have a shape for which prior art heat shields are difficult to use. For example, known heat shields are generally formed from a sheet material that is formed into an annular shape and then attached to the engine component. The irregular diameters of the component 900 prevents application of a heat shield in such manner. According to the present disclosure, one or more annular walls 910 are concurrently formed with the component 900 during fabrication. The annular walls 910 include ribs 912, which are helical ribs similar to the ribs 224. The ribs 912 allow the thin walls of the annular walls 910 to be fabricated using a powder bed AM process without damage to the annular wall 910. The AM fabrication process allows placement of the thin walled structure in a previously inaccessible area. For example, as illustrated in FIG. 9, the component 900 has a maximum diameter (Dmax) that is larger than a minimum diameter (D1) of the annular wall 910. Additionally, another portion of the annular wall 910 has a diameter (D2) smaller than Dmax on the other side of the cross-section having Dmax. Accordingly, the annular wall 910 cannot be placed on the component 900 using traditional techniques involving sliding a pre-fabricated heat shield over an engine component.

By fabricating the annular wall 910 concurrently with the component 900 using additive manufacturing to manufacture the annular wall 910 with ribs 912, the component 900 is provided with an annular wall 910 that conforms to the shape of the component 900. Moreover, the annular wall 910 has a smaller average thickness and therefore lighter weight, than a heat shield with solid walls and no ribs.

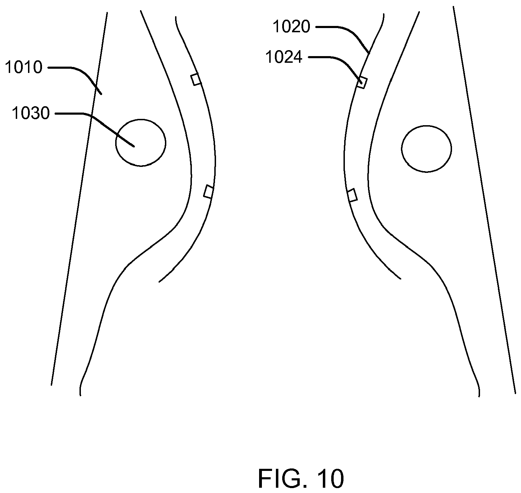

FIG. 10 illustrates another example of a component 1010 and an annular wall 1020. The annular wall 1020 is internal to the component 1010. For example, the annular wall 1020 may be a heat shield that thermally insulates a portion 1030 of the component 1010 used to route a flow of cooling air, fuel, or wires for electronics. The annular wall 1020 provides additional protection for such sensitive components. The ribs 1024 are located on a radially distal surface of the annular wall 1020 that faces the component 1010. Accordingly, the ribs 1024 may be hidden from view, and a flat surface of the annular wall 1020 faces hot air or other potential sources of damage.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Various aspects and embodiments of the invention are defined by the following clauses:
1. A method for fabricating an object, comprising:
   (a) irradiating a layer of powder in a powder bed with an energy beam in a series of scan lines to form a fused region;
   (b) providing a subsequent layer of powder over the powder bed by passing a recoater arm over the powder bed from a first side of the powder bed to a second side of the powder bed; and
   (c) repeating steps (a) and (b) until the object is formed in the powder bed,
   wherein the object includes a first annular portion and a second annular portion, the second portion being an annular wall with a thickness less than 0.022 inches across a majority of a surface of the second portion, the second portion conforming to a shape of the first portion, wherein a mean distance between the first portion and second portion is less than 0.080 inches, wherein the second portion includes a plurality of ribs having a thickness greater than 0.030 inches and a mean thickness of the second portion is less than 0.100 inches.
2. The method of clause 1, wherein the mean thickness of the second portion is less than 0.030 inches.
3. The method of clause 1, wherein the second portion is external to the first portion.
4. The method of clause 1, wherein the second portion is internal to the first portion.
5. The method of clause 1, wherein the plurality of ribs form an isogrid or an orthogrid.
6. The method of clause 1, wherein the first portion is a combustor liner.
7. The method of clause 1, wherein the second portion is a heat shield for the first portion.
8. The method of clause 1, wherein the second portion is connected to the first portion along an edge of the annular wall.
9. The method of clause 7, wherein the second portion is separated from the engine component except along the edge of the annular wall.
10. The method of clause 3, wherein the second portion includes a lateral cross-section with a diameter greater than a greatest diameter lateral cross-section of the first portion and the greatest lateral cross-section of the first portion has a diameter greater than a smallest diameter lateral cross-section of the second portion.
11. The method of clause 10, wherein the greatest lateral cross-section of the first portion is located between the smallest diameter lateral cross-section of the second portion and another lateral cross-section of the second portion having a diameter less than the diameter of the greatest lateral cross-section of the first portion.
12. The method of clause 1, wherein every point of the second portion is within 0.080 inches of the surface of the first portion.
13. The method of clause 1, wherein a percentage of a total surface area of the first portion that is connected to the second portion is less than 1 percent.
14. A thin walled structure, comprising:
   an annular wall with a thickness less than 0.022 inches across a majority of a surface of the thin walled structure and a plurality of helical ribs having a thickness greater than 0.030 inches,
   wherein the annular wall has a mean thickness less than 0.100 inches, and
   wherein the annular wall conforms to a surface of a component and a mean distance between the annular wall and the component is less than 0.080 inches.
15. The thin walled structure of claim 1, wherein the mean thickness of the annular wall is less than 0.030 inches.
16. The thin walled structure of clause 14, wherein the thin walled structure is connected to the component along an edge of the annular wall.
17. The thin walled structure of clause 14, wherein the thin walled structure is separated from the component except along the edge of the annular wall.
18. The thin walled structure of clause 14, wherein the annular wall conforms to an internal surface of the component.
19. The thin walled structure of clause 14, wherein the annular wall conforms to an external surface of the component.
20. The thin walled structure of clause 19, wherein the annular wall includes a cross-section with a diameter greater than a greatest diameter cross-section of the component and the greatest diameter cross-section of the component is greater than a smallest diameter cross-section of the annular wall.
21. The thin walled structure of clause 14, wherein every point of the second portion is within 0.080 inches of the surface of the first portion.
22. The thin walled structure of clause 14, wherein a percentage of a total surface area of the thin walled structure that is connected to the engine component is less than 1 percent.
23. The thin walled structure of clause 14, wherein the plurality of ribs form an isogrid or an orthogrid.
24. The thin walled structure of claim 14, wherein the majority of the surface of the thin walled structure is separated from the engine component by a constant separation.

## Claims

1. An additively manufactured part, comprising:
an annular component (210) surrounding an axis along at least 180 degrees of rotation;
a thin walled structure (220) fused to the annular component (210) at a seam, the thin walled structure (220) comprising:
an annular wall (910), the annular wall (910) being concentric with the annular component (210) and having a diameter that exceeds a diameter of the annular component (210), the annular wall (910) having a thickness less than 0.022 inches across a majority of a surface of the annular wall (910), and
a plurality of helical ribs (224) integrated with the annular wall (910), the helical ribs (224) having a thickness greater than 0.030 inches,
wherein the thin walled structure (220) has a mean thickness less than 0.100 inches, preferably less than 0.030 inches, the mean thickness determined inclusive of the annular wall (910) and the plurality of helical ribs (224), and
wherein the annular wall (910) conforms to a surface of the annular component (210) and a mean distance between the annular wall (910) and the annular component (210) is less than 0.080 inches.

2. The additively manufactured part of claim 1, wherein the seam connects the thin walled structure (220) to the annular component (210) along an edge of the annular wall (910).

3. The additively manufactured part of claim 2, wherein the thin walled structure (220) is separated from the annular component (210) except at the seam along the edge of the annular wall (910).

4. The additively manufactured part of any of claims 1 to 3, wherein the annular wall (910) conforms to an internal surface of the annular component (210); or wherein the annular wall (910) conforms to an external surface of the annular component (210).

5. The additively manufactured part of claim 4, wherein the annular wall (910) includes a cross-section with a diameter greater than a greatest diameter cross-section of the annular component (210) and the greatest diameter cross-section of the annular component (210) is greater than a smallest diameter cross-section of the annular wall (910).

6. The additively manufactured part of any of claims 1 to 5, wherein every point of the annular wall (910) is within 0.080 inches of the surface of the annular component (210).

7. The additively manufactured part of any of claims 1 to 6, wherein a percentage of a total surface area of the thin walled structure (220) that is connected to the annular component (210) is less than 1 percent.

8. The additively manufactured part of any of claims 1 to 7, wherein the plurality of ribs (224) form an isogrid or an orthogrid.

9. The additively manufactured part of any of claims 1 to 8, wherein the majority of the surface area of the annular wall (910) is separated from the annular component (210) by a constant separation distance.

10. The additively manufactured part of any of claims 1 to 9, wherein the thin walled structure (220) is a heat shield for the annular component (210); and/or wherein the annular component (210) is a combustor liner.

11. The additively manufactured part of any of claims 1 to 10, wherein the helical ribs (224) have a thickness of 2 to 5 times the thickness across the majority of the surface area of the thin annular wall (910).

12. The additively manufactured part of any of claims 1 to 11, wherein a maximum diameter of the annular component (210) is larger than a minimum diameter of the annular wall (910) at a first portion of the annular wall (910), the first portion of the annular wall (910) being axially adjacent to the portion of the annular component (210) having the maximum diameter.

13. The additively manufactured part of claim 12, wherein a second portion of the annular wall (910) has a diameter that is smaller than the maximum diameter of the annular wall (910), the first portion of the annular component (210) and the second portion of the annular component (210) located at opposite axially adjacent sides of the portion of the annular component (210) having the maximum diameter.

14. The additively manufactured part of any of claims 1 to 13, wherein the plurality of helical ribs (224) are located on a radially distal surface of the annular wall (910), the radially distal surface facing the annular component (210).

15. The additively manufactured part of claim 14, wherein the radially proximal surface of the annular wall (910) does not include any of the helical ribs (224).
